# EUROPEAN PATENT SPECIFICATION

(11) **EP 4 350 408 B1**
(45) Date of publication and mention of the grant of the patent: **31.12.2025**
(21) Application number: 21944064.1
(22) Date of filing: 31.05.2021
(51) Int. Cl.: G02B 6/44

(54) **FIBER-OPTIC CABLE AND FIBER-OPTIC CABLE MANUFACTURING DEVICE**
FASEROPTISCHES KABEL UND HERSTELLUNGSVORRICHTUNG FÜR FASEROPTISCHES KABEL
CÂBLE À FIBRES OPTIQUES ET DISPOSITIF DE FABRICATION DE CÂBLE À FIBRES OPTIQUES

(43) Date of publication of application: 10.04.2024
(73) Proprietor: NTT, Inc., Tokyo 100-8116 (JP)
(72) Inventor: KIKUCHI, Masashi, Musashino-shi, Tokyo 180-8585 (JP); TETSUTANI, Shigekatsu, Musashino-shi, Tokyo 180-8585 (JP); YAMADA, Yusuke, Musashino-shi, Tokyo 180-8585 (JP); SAKURAI, Akira, Musashino-shi, Tokyo 180-8585 (JP); TANIOKA, Hiroaki, Musashino-shi, Tokyo 180-8585 (JP)
(74) Representative: v. Bezold & Partner Patentanwälte - PartG mbB
(86) International application number: PCT/JP2021/020753
(87) International publication number: WO 2022/254556

(56) References cited:
- JP-A- 2003 241 043
- JP-A- 2009 145 794
- JP-A- 2020 038 326
- JP-A- H08 220 395
- KR-A- 20190 088 890
- US-A- 5 619 606
- US-A1- 2019 227 248

## Description

### [Technical Field]

The present disclosure relates to an optical fiber cable and an optical fiber cable manufacturing apparatus.

### [Background Art]

In recent years, regarding optical fiber communication systems, since the transmission capacity is limited by nonlinear effects and fiber fuses that occur in optical fibers, optical fibers with an enlarged effective cross-sectional area (hereinafter referred to as Aeff) have been developed to alleviate these limitations (see, for example, NPL 1).

Meanwhile, in order to reduce the diameter and weight of optical fiber cables, a non-slot structure, in which slot rods for housing optical fibers are eliminated, has been developed and put into practical use (see, for example, PTL 1). Optical fiber cables are provided with tension members to protect the optical fiber core wires from temperature change and tension applied during installation. In conventional cables, the tension member is disposed inside the slot rod, whereas in the optical fiber cable with the non-slot structure, the tension member is disposed inside the sheath.

Moreover, the connection of the optical fiber cable involves the dismantling of the cable. When dismantling the cable, it is necessary to consider so as to avoid an increase in optical loss that is due to bending. As one means of achieving this, the risk of increase in optical loss is reduced by mounting an optical fiber with controlled bending loss in an optical fiber cable with a non-slot structure.

### [Citation List]

### [Patent Literature]

[PTL 1] Japanese Patent No. 4774337 (NTT)

JP 2020 038326 A shows a structure of an optical fiber cable that is designed to allow a new shape and form to be applied to a tension member, enabling higher density without altering the mechanical properties. The cable consists of a unit that accommodates one or more optical fibers, a sheath that accommodates this unit, and a plate-like tension member contained in the sheath, extending along the length of the optical fibers.

JP 2009 145794 A shows an optical cable that is designed to allow secure removal of optical fibers by suppressing the spring-out phenomenon of the tension member when the jacket is torn. It consists of a cable body part, where an optical fiber ribbon with multiple optical fibers integrated into a single unit by a tape resin is placed between two tension members and covered together with them by a jacket. In parallel, a support line part contains a supporting line also covered by the jacket. These two parts are connected by a neck part, which is continuous with each jacket. In a cross section perpendicular to the axis of the optical fibers, a line passing through the centers of the two tension members is arranged so that it does not pass through the neck part.

JP 2003 241043 A shows an apparatus for manufacturing an optical fiber cable, with which the bending direction of two or more supporting wires can be arranged and fixed, and high flexibility is obtained. Supporting wires and a coated optical fiber are placed in parallel on the same flat surface and covered with an outer sheath. The apparatus includes a coating apparatus and multiple rollers for supplying the supporting wires. The disk surfaces of the rollers are arranged in parallel, and their tangent lines toward the coating device lie on the same flat surface. The disk surfaces are arranged vertically to this flat surface.

JP H08 220395 A discloses to make an optical fiber cable smaller in size and higher in density by disposing one piece of outer peripheral strength members on both sides facing each other across the axial center in a sheath. Coated fiber ribbon laminates are housed in slots of a housing body, which is wrapped with wrapping tapes and covered with a sheath. Slot rods are formed in the axial center of the housing body, where central tension members made of twisted steel wires are placed. Outer peripheral tension members, each consisting of one steel wire, are disposed on both sides across the axial center in the sheath. These outer tension members increase tensile strength without enlarging the central tension member, enabling higher-density housing of coated fiber ribbons.

A related US 2019/227248 A1 discloses an optical fiber cable including a core comprising gathered optical fibers; an inner sheath housing the core; a wire body embedded in the inner sheath; tension members embedded in the inner sheath, wherein the core is interposed between the tension members; a reinforcing sheet that covers the inner sheath; and an outer sheath that covers the reinforcing sheet.

### [Non Patent Literature]

[NPL 1] T. Kato, M. Hirano, M. Onishi and M. Nishimura, "Ultra low nonlinearity low loss pure silica core fiber for long-haul WDM transmission," Fifth Asia-Pacific Conference on ... and Fourth Optoelectronics and Communications Conference on Communications, Beijing, China, 1999, pp. 1575-1576 vol. 2, doi: 10.1109/APCC.1999.820589.

### [Summary of Invention]

### [Technical Problem]

However, optical loss that is due to bending tends to increase in optical fibers of a specific type such as an optical fiber with an alleviated transmission capacity limitation. Therefore, it is impossible to reduce the risk of an increase in optical loss in dismantling the optical fiber cable. For example, when the sheath resiles due to its rigidity in the work of taking out the optical fiber core wire, there is concern that the optical fiber core wire taken out from the tear may become caught and an increase in optical loss owing to bending may be caused. Particularly, in an optical fiber cable with a non-slot structure, there is a problem that the risk of an increase in optical loss is further increased because the sheath and the tension member are integrated with each other and therefore, the force of catching the optical fiber cable is large.

In order to solve the above problem, an object of the present disclosure is to realize an optical fiber cable and an optical fiber cable manufacturing apparatus which avoid an optical fiber core wire caught in a sheath and prevent an increase in optical loss owing to bending of the optical fiber core wire.

### [Solution to Problem]

In order to achieve the above object, with the optical fiber cable and the optical fiber cable manufacturing apparatus according to the present disclosure, in an optical fiber cable provided with a plurality of tension members inside a sheath, the tension members are disposed, in an axial direction of a cable core, at respective positions thereof constituted by a pair of positions where an axial center of the cable core is sandwiched, and are warped outward from the axial center of the cable core.

Specifically, an optical fiber cable according to the present invention includes:
a cable core having a plurality of optical fiber core wires;
a sheath covering the cable core;
two tear strings in the innermost layer of the sheath; and at least two or more tension members, having warping ability outward from an axial center of a cable core, disposed inside the sheath along the cable core,
and any one of the tension members is disposed at a position laying along a position of another of the tension members with the axial center of the cable core sandwiched between the positions,
wherein the tension member warps outward from the axial center of the cable core when the sheath is torn, and the cable core is exposed,
and when the two tear strings are pulled toward the outside of the optical fiber cable, the sheath is torn and at this instant, the cable core is exposed from the tear by warps of the tension members.

Specifically, an optical fiber cable manufacturing apparatus for manufacturing the optical fiber cable according to the present invention as defined by claim 2 includes:
a tension member delivery portion that delivers a plurality of tension members, each of which warps outward from an axial center of a cable core, to a periphery of the cable core; and
a sheath forming portion that covers the cable core and the plurality of tension members around the cable core with a sheath with warps of the plurality of delivered tension members suppressed.

### [Advantageous Effects of Invention]

According to the present disclosure, it is practicable to realize an optical fiber cable and an optical fiber cable manufacturing apparatus which avoid the optical fiber core wire caught in a sheath and prevent an increase in optical loss owing to bending of the optical fiber core wire.

### [Brief Description of Drawings]

[Fig. 1]

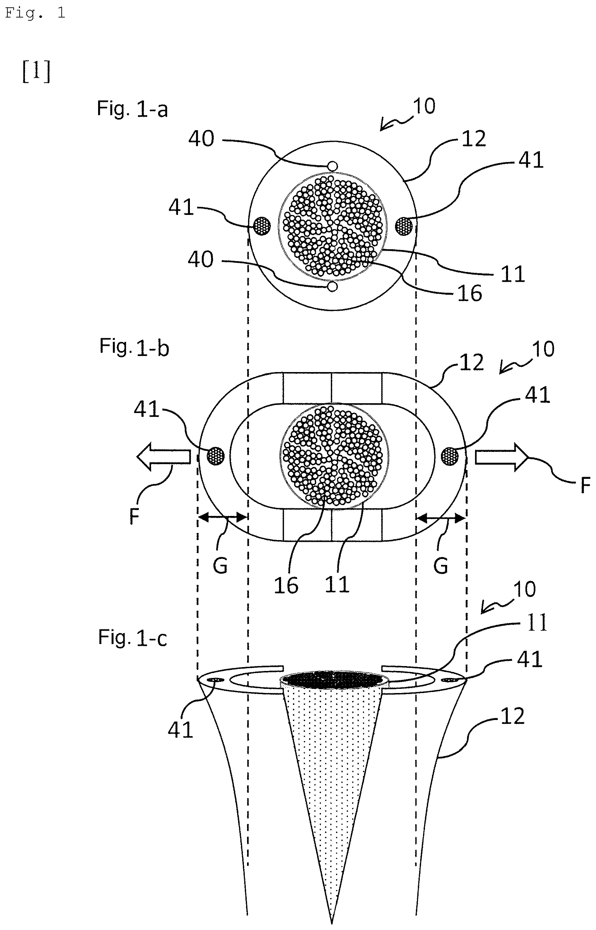

   Fig. 1 shows an example of a structure of an optical fiber cable according to a first embodiment.
[Fig. 2]

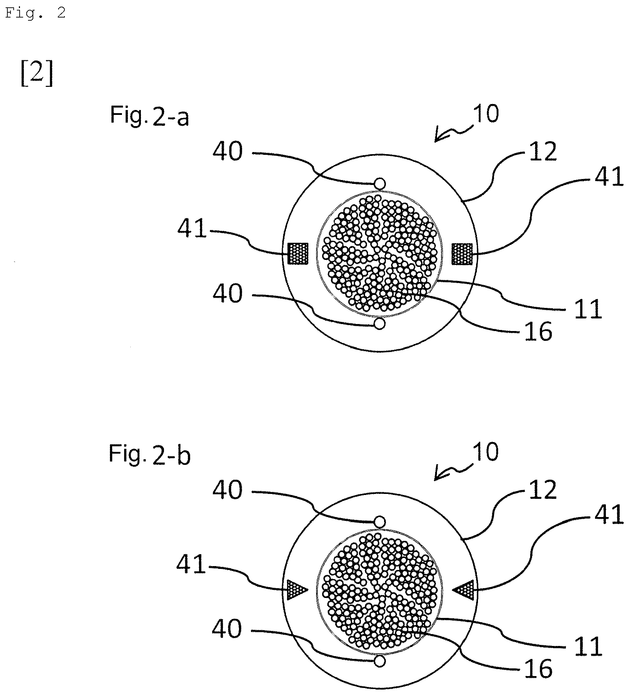

   Fig. 2 shows an example of a structure of the optical fiber cable according to the first embodiment.
[Fig. 3]

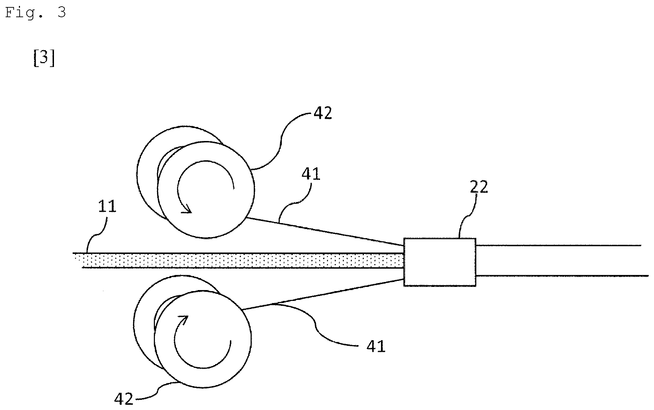

   Fig. 3 shows an example of a configuration of an optical fiber cable manufacturing apparatus according to a second embodiment.
[Fig. 4]

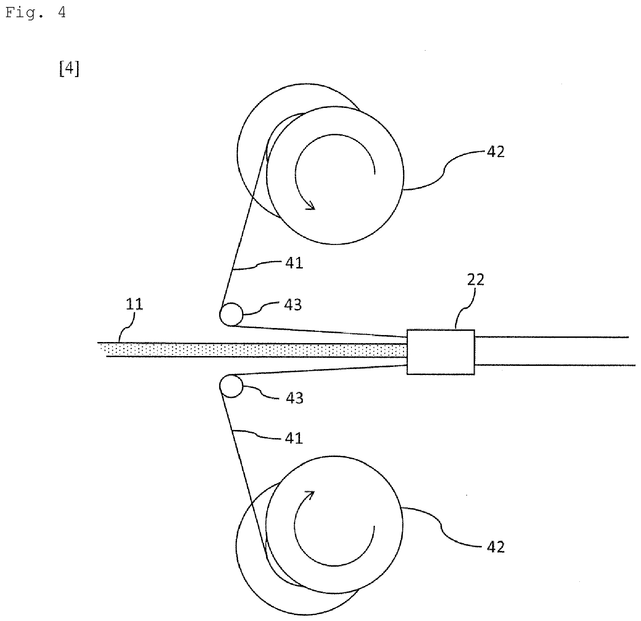

   Fig. 4 shows an example of a configuration of an optical fiber cable manufacturing apparatus according to a third embodiment.
[Fig. 5]

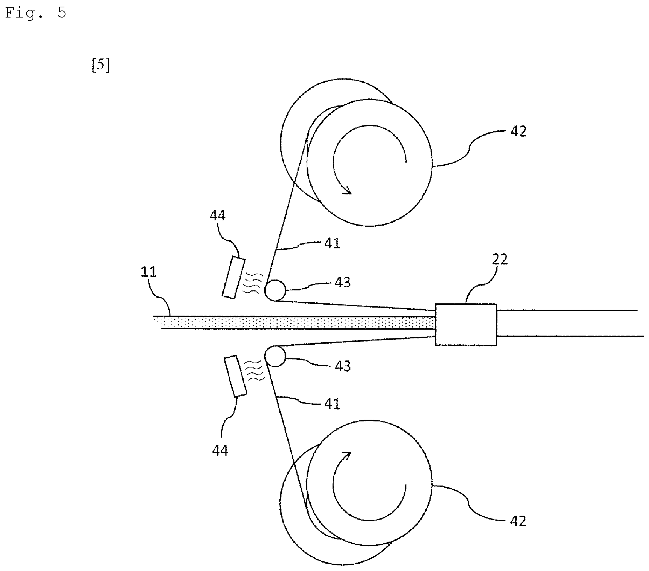

   Fig. 5 shows an example of a configuration of an optical fiber cable manufacturing apparatus according to a fourth embodiment.

### [Description of Embodiments]

Embodiments of the present disclosure will be described hereinafter in detail with reference to the drawings. It is to be understood that the present disclosure is not limited to the embodiments described below. The embodiments are merely exemplary and the present disclosure can be implemented in various modified and improved modes based on knowledge of those skilled in the art. Constituent elements with the same reference signs in the present specification and in the drawings represent the same constituent elements.

### (First Embodiment)

Fig. 1 shows a first embodiment of the present invention. Fig. 1-a shows a cross-sectional view of an optical fiber cable 10 before a sheath 12 is torn. On the other hand, Fig. 1-b shows a cross-sectional view of the optical fiber cable 10 after the sheath 12 has been torn, and Fig. 1-c shows a side view of the optical fiber cable 10 shown in Fig. 1-b.

As shown in Fig. 1-a, the optical fiber cable 10 includes a cable core 11 fabricated by gathering a plurality of optical fiber core wires 16, a sheath 12 covering the cable core 11, and at least two or more tension members 41 disposed inside the sheath 12. A plurality of tension members 41 are provided, and each pair of tension members 41 is disposed at positions, between which the axial center of the cable core 11 is sandwiched, in the axial direction of the cable core 11. Although the number of the tension members 41 in Fig. 1-a is two, the present disclosure is not limited thereto. Examples of the material of the tension members 41 include steel, fiber reinforced plastics (FRP), aramid fiber, and the like.

Each tension member 41 has warping ability outward from the axial center of the cable core 11. The sheath 12 incorporates the tension member 41 therein such that the tension member 41 is along the cable core 11 with warps thereof suppressed. Thus, warps of the tension members 41 incorporated in the sheath 12, for example, warps of two paired tension members 41 facing each other across the axial center of the cable core 11 shown in Fig. 1-a, is suppressed by the sheath 12 until the sheath 12 is torn, and therefore no visible warps appear.

Although the tension member 41 shown in Fig. 1 has a circular cross-section, an example of a cross-sectional shape different from this is shown in Fig. 2. Figs. 2-a and 2-b show cross-sectional views of the optical fiber cable 10.

As shown in Fig. 2-a, the tension member 41 may have a square cross section.

Also, as shown in Fig. 2-b, the tension member 41 may have a triangular cross section. In this embodiment, the tension member 41 may be disposed with a vertex of the triangle facing the cable core 11 side so that the tension member 41 easily warps outward from the axial center of the cable core 11. The cross section of the tension member 41 is not limited thereto, and can have any shape as long as the tension member 41 can warp outward from the axial center of the cable core 11.

The optical fiber cable 10 may include two tear strings 40 in the innermost layer of the sheath 12, in a direction different from that of each tension member 41 from the viewpoint of the axial center of the cable core 11, in order to tear the sheath 12. The two tear strings 40 are disposed at positions facing each other across the axis of the cable core 11. In this case, the two tension members 41 are disposed at positions facing each other across the axis of the cable core 11, and in the middle in the direction along circumference connecting the two tear strings 40.

When the two tear strings 40 at the positions shown in Fig. 1 are pulled toward the outside of the optical fiber cable 10, the sheath 12 is torn. At this instant, as shown in Figs. 1-b and 1-c, the sheath 12 is transformed so as to move away from the axial center of the cable core 11 by means of forces F generated by the warps of the tension members 41. Fig. 1-b shows a state in which the outer edge of the sheath 12 shown in Fig. 1-a is shifted by a distance G. As shown in Fig. 1-c, the cable core 11 is exposed from the tear by the warps of the tension members 41. Therefore, the risk of the optical fiber core wire 16 being caught in a tear of the sheath 12 and increasing an optical loss is reduced.

### (Second Embodiment)

Fig. 3 shows a second embodiment of the present invention. In the present embodiment, an optical fiber cable manufacturing apparatus will be described.

An optical fiber cable manufacturing apparatus 20 includes
a tension member delivery portion 42 that delivers a plurality of tension members 41, each of which warps outward from an axial center of a cable core 11, to the periphery of the cable core 11, and
a sheath forming portion 22 that covers the cable core 11 and the plurality of tension members 41 around the cable core 11 with a sheath 12 with warps of the plurality of delivered tension members 41 suppressed.

Specifically, the tension member delivery portion 42 including a plurality of bobbins delivers the wound tension member 41 from the cable core 11 side to the sheath forming portion 22, and covers the cable core 11 while integrating with the sheath 12 in the sheath forming portion 22. Thereat, the tension member 41 is warped because it is wound around the tension member delivery portion 42. Further, the direction is adjusted so that the pair of tension member delivery portions 42 face each other across the cable core 11 and the direction of warp is different from each other.

Here, the tension member delivery portion 42 may be disposed such that its own rotation axis is perpendicular to the axis of the cable core 11, as shown in Fig. 3, in order to deliver the tension member 41 wound around the tension member delivery portion 42 and get it warping outward from the axial center of the cable core 11, and may deliver the tension member 41 to the sheath forming portion 22 in the rotating direction of the tension member delivery portion 42 on the cable core 11 side.

With the configuration as described above, the optical fiber cable manufacturing apparatus 20 capable of manufacturing the optical fiber cable 10 according to the first embodiment can be realized.

### (Third Embodiment)

Fig. 4 shows a third embodiment of the present invention.

In contrast to the configuration described in the second embodiment, a tension member deforming portion 43 including a capstan is provided between the tension member delivery portion 42 and the sheath forming portion 22, and the tension member 41 delivered from the tension member delivery portion 42 is configured to pass over capstans, which are at least one or more tension member deforming portions 43. Further, when the tension member 41 passes through the tension member deforming portion 43, the tension member 41 is disposed in a direction of warping outward from the axial center of the cable core 11.

For example, as shown in Fig. 4, a capstan which is the tension member deforming portion 43 may be disposed between the tension member delivery portion 42 and the cable core 11 with the rotation axis of the capstan perpendicular to the axis of the cable core 11. Then, the tension member delivery portion 42 may deliver the tension member 41 to the sheath forming portion 22 along the cable core 11 side of the tension member deforming portion 43.

With the configuration as described above, the optical fiber cable manufacturing apparatus 20 according to the second embodiment can be realized, and since it is not necessary to reduce the barrel diameter of the tension member delivery portion 42 for adding a necessary warp to the tension member 41, the long optical fiber cable 10 can be manufactured in one operation.

### (Fourth Embodiment)

In the configuration described in the third embodiment, the tension member 41 is warped only at a timing when it passes through the tension member deforming portion 43. Therefore, it is necessary to control the diameter of the tension member deforming portion 43 and the delivery tension of the tension member 41 so as to obtain a sufficient warp. Therefore, there arises a problem that the risk of breakage of the tension member 41 is increased and the reinforcement of the peripheral member supporting the tension member deforming portion 43 is required.

Hence, Fig. 5 shows a fourth embodiment of the present invention.

In addition to the configuration shown in the third embodiment, a plastic deformation promoting portion 44 is provided, so that deformation is likely to be retained after the tension member 41 passes through the tension member deforming portion 43.

The specific configuration of the plastic deformation promoting portion 44 is within a category of design taking the tension member 41 to be used into account, and for example, can employ a method for heating when the tension member 41 is made of a composite material such as FRP, or can employ a method for hardening and annealing when the tension member 41 is made of a steel material.

With the configuration as described above, deformation provided at the timing when the tension member 41 passes through the tension member deforming portion 43 is likely to be retained, so that a desired warp can be easily obtained.

The plastic deformation promoting portion 44 may be disposed not only at the tension member deforming portion 43 but also at the tension member delivery portion 42 or between the tension member delivery portion 42 and the tension member deforming portion 43.

### [Industrial Applicability]

The optical fiber cable and optical fiber cable manufacturing apparatus according to the present disclosure can be applied to the information and communication industries.

### [Reference Signs List]

10: Optical fiber cable
11: Cable core
12: Sheath
16: Optical fiber core wire
20: Optical fiber cable manufacturing apparatus
22: Sheath forming portion
40: Tear string
41: Tension member
42: Tension member delivery portion
43: Tension member deforming portion
44: Plastic deformation promoting portion

## Claims

1. An optical fiber cable (10) comprising:
a cable core (11) having a plurality of optical fiber core wires (16);
a sheath (12) covering the cable core (11);
two tear strings (40) in the innermost layer of the sheath (12); and
at least two or more tension members, having warping ability outward from an axial center of a cable core (11), disposed inside the sheath (12) along the cable core (11),
wherein any one of the tension members is disposed at a position laying along a position of another of the tension members with the axial center of the cable core (11) sandwiched between the positions,
wherein the tension member warps outward from the axial center of the cable core (11) when the sheath (12) is torn, and the cable core (11) is exposed, and when the two tear strings (40) are pulled toward the outside of the optical fiber cable (10), the sheath (12) is torn and at this instant, the cable core (11) is exposed from the tear by warps of the tension members (41).

2. An optical fiber cable manufacturing apparatus (20) for manufacturing the optical fiber cable (10) according to claim 1 comprising:
a tension member delivery portion (42) that delivers a plurality of tension members, each of which warps outward from an axial center of a cable core (11), to a periphery of the cable core (11); and
a sheath forming portion (22) that covers the cable core (11) and the plurality of tension members around the cable core (11) with a sheath (12) with warps of the plurality of delivered tension members suppressed.

3. The optical fiber cable manufacturing apparatus (20) according to claim 2, wherein the tension member delivery portion (42) includes a plurality of bobbins that are disposed around the cable core (11), and that deliver the tension members wound around the tension member delivery portion (42) from the cable core (11) side of the tension member delivery portion (42) to the sheath forming portion (22).

4. The optical fiber cable manufacturing apparatus (20) according to claim 2 or 3, further comprising a tension member deforming portion (43) that reinforces warp of the tension members outward from the axial center of the cable core (11), wherein the tension member delivery portion (42) delivers the tension members to the sheath forming portion (22) via the tension member deforming portion (43).

5. The optical fiber cable manufacturing apparatus (20) according to claim 4, wherein the tension member deforming portion (43) is a capstan whose rotation axis is perpendicular to the axis of the cable core (11).

6. The optical fiber cable manufacturing apparatus (20) according to claim 4 or 5, further comprising a plastic change promoting portion that retains the warp of the tension member outward from the axial center of the cable core (11).

## Patentansprüche

1. Ein faseroptisches Kabel (10), umfassend:
einen Kabelkern (11), umfassend eine Mehrzahl von optischen Faser-Kernadern (16);
einen Mantel (12), der den Kabelkern (11) umhüllt;
zwei Reißschnüre (40) in der innersten Schicht des Mantels (12); und
mindestens zwei oder mehr Spannungsglieder, die eine Biegeverformbarkeit nach außen von einer axialen Mitte des Kabelkerns (11) aufweisen und innerhalb des Mantels (12) entlang des Kabelkerns (11) angeordnet sind,
wobei eines der Spannungsglieder an einer Position angeordnet ist, die entlang einer Position eines anderen Spannungsglieds liegt, wobei die axiale Mitte des Kabelkerns (11) zwischen diesen Positionen liegt,
wobei sich das Spannungsglied nach außen von der axialen Mitte des Kabelkerns (11) biegt, wenn der Mantel (12) aufgerissen wird und der Kabelkern (11) freigelegt wird,
und wenn die beiden Reißschnüre (40) in Richtung der Außenseite des faseroptischen Kabels (10) gezogen werden, wird der Mantel (12) aufgerissen, und in diesem Moment wird der Kabelkern (11) durch die Biegung der Spannungsglieder (41) aus dem Riss freigelegt.

2. Eine faseroptische Kabel-Herstellungsvorrichtung (20) zur Herstellung des faseroptischen Kabels (10) nach Anspruch 1, umfassend:
einen Spannungsglied-Zuführabschnitt (42), der eine Mehrzahl von Spannungsgliedern, die jeweils eine Biegeverformbarkeit nach außen von einer axialen Mitte eines Kabelkerns (11) aufweisen, an einem Umfang des Kabelkerns (11) zuführt; und
einen Mantelbildungsabschnitt (22), der den Kabelkern (11) und die Mehrzahl der Spannungsglieder um den Kabelkern (11) mit einem Mantel (12) umhüllt, womit die Biegung der Mehrzahl der zugeführten Spannungsglieder unterdrückt wird.

3. Die faseroptische Kabel-Herstellungsvorrichtung (20) nach Anspruch 2, wobei der Spannungsglied-Zuführabschnitt (42) eine Mehrzahl von Spulen umfasst, die um den Kabelkern (11) angeordnet sind und die Spannungsglieder, die auf dem Spannungsglied-Zuführabschnitt (42) aufgewickelt sind, von der Kabelkernseite (11) des Spannungsglied-Zuführabschnitts (42) zum Mantelbildungsabschnitt (22) zuführen.

4. Die faseroptische Kabel-Herstellungsvorrichtung (20) nach Anspruch 2 oder 3, weiter umfassend einen Spannungsglied-Verformungsabschnitt (43), der die Biegung der Spannungsglieder nach außen von der axialen Mitte des Kabelkerns (11) verstärkt,
wobei der Spannungsglied-Zuführabschnitt (42) die Spannungsglieder über den Spannungsglied-Verformungsabschnitt (43) an den Mantelbildungsabschnitt (22) zuführt.

5. Die faseroptische Kabel-Herstellungsvorrichtung (20) nach Anspruch 4, wobei der Spannungsglied-Verformungsabschnitt (43) eine Kappstanze ist, deren Rotationsachse senkrecht zur Achse des Kabelkerns (11) verläuft.

6. Die faseroptische Kabel-Herstellungsvorrichtung (20) nach Anspruch 4 oder 5, weiter umfassend einen Abschnitt zur Förderung plastischer Veränderung, der die Biegung des Spannungsglieds nach außen von der axialen Mitte des Kabelkerns (11) beibehält.

## Revendications

1. Câble à fibres optiques (10) comprenant :
une âme de câble (11) comportant une pluralité de fils d'âme (16) de fibres optiques ;
une gaine (12) recouvrant l'âme de câble (11) ;
deux cordons de déchirement (40) dans la couche la plus intérieure de la gaine (12) ; et
au moins deux éléments de tension, ayant une capacité de déformation vers l'extérieur à partir d'un centre axial d'une âme de câble (11), disposés à l'intérieur de la gaine (12) le long de l'âme de câble (11),
dans lequel l'un quelconque des éléments de tension est disposé à une position située le long d'une position d'un autre des éléments de tension, le centre axial de l'âme de câble (11) étant pris en sandwich entre les positions,
dans lequel l'élément de tension se déforme vers l'extérieur à partir du centre axial de l'âme de câble (11) lorsque la gaine (12) est déchirée, et l'âme de câble (11) est exposée,
et quand les deux cordons de déchirement (40) sont tirés vers l'extérieur du câble à fibres optiques (10), la gaine (12) est déchirée et, à ce moment, l'âme de câble (11) est exposée par suite du déchirement par les déformations des éléments de tension (41).

2. Appareil (20) de fabrication de câble à fibres optiques pour fabriquer le câble à fibres optiques (10) selon la revendication 1, comprenant :
une partie de distribution d'éléments de tension (42) qui distribue une pluralité d'éléments de tension, dont chacun se déforme vers l'extérieur à partir d'un centre axial d'une âme de câble (11), à une périphérie de l'âme de câble (11) ; et
une partie de formation de gaine (22) qui recouvre l'âme de câble (11) et la pluralité d'éléments de tension autour de l'âme de câble (11) avec une gaine (12), les déformations de la pluralité d'éléments de tension distribués étant supprimées.

3. Appareil (20) de fabrication de câble à fibres optiques selon la revendication 2, dans lequel la partie de distribution d'éléments de tension (42) comprend une pluralité de bobines qui sont disposées autour de l'âme de câble (11), et qui distribuent les éléments de tension enroulés autour de la partie de distribution d'éléments de tension (42) depuis le côté âme de câble (11) de la partie de distribution d'éléments de tension (42) vers la partie de formation de gaine (22).

4. Appareil (20) de fabrication de câble à fibres optiques selon la revendication 2 ou 3, comprenant en outre une partie de déformation d'éléments de tension (43) qui renforce la déformation des éléments de tension vers l'extérieur à partir du centre axial de l'âme de câble (11), dans lequel la partie de distribution d'éléments de tension (42) distribue les éléments de tension vers la partie de formation de gaine (22) via la partie de déformation d'éléments de tension (43).

5. Appareil (20) de fabrication de câble à fibres optiques selon la revendication 4, dans lequel la partie de déformation d'éléments de tension (43) est un cabestan dont l'axe de rotation est perpendiculaire à l'axe de l'âme de câble (11).

6. Appareil (20) de fabrication de câble à fibres optiques selon la revendication 4 ou 5, comprenant en outre une partie favorisant un changement plastique qui maintient la déformation de l'élément de tension vers l'extérieur à partir du centre axial de l'âme de câble (11) .
